**Europäisches Patentamt**

**European Patent Office**

**Office européen des brevets**

(19)

(11) Veröffentlichungsnummer: **0 276 664**

**A1**

(12) **EUROPÄISCHE PATENTANMELDUNG**

(21) Anmeldenummer: **88100220.8**

(22) Anmeldetag: **09.01.88**

(51) Int. Cl.⁴ **B23K 26/00**

(30) Priorität: **28.01.87 DE 3702411**

(43) Veröffentlichungstag der Anmeldung:
**03.08.88 Patentblatt 88/31**

(84) Benannte Vertragsstaaten:
**FR GB IT**

(71) Anmelder: **MESSER GRIESHEIM GMBH**
**Hanauer Landstrasse 330**
**D-6000 Frankfurt/Main 1(DE)**

(72) Erfinder: **Haferkorn, Gunar**
**Fasanenweg 3**
**D-8038 Gröbenzell(DE)**
Erfinder: **Kappelsberger, Erwin**
**Gelbhofstrasse**
**D-8000 München 70(DE)**

(54) **Verfahren zur Herstellung von rundnahtgeschweissten Scheibenrädern.**

(57) Die Erfindung betrifft ein Verfahren zur Herstellung von rundnahtgeschweißten Scheibenrädern, bestehend aus einem Felgenrad (30,71) und der mit dem Felgenrad zu verschweißenden Radschüssel (31,72).

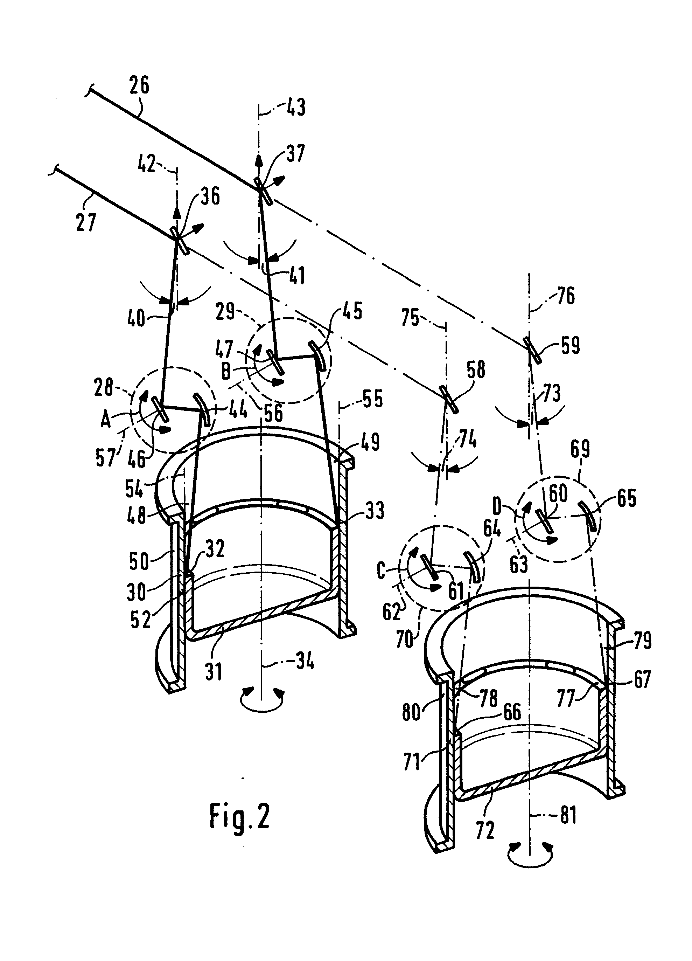

Zur Verringerung der Fertigungszeiten bei der Herstellung der Scheibenräder werden mindestens zwei aus einem gefalteten Axialstromlaser ausgekoppelte Laserstrahlen (26,27) in mindestens zwei separaten Schweißköpfen (28,29; 69,70) fokussiert und auf die zwischen dem Felgenrad und der Radschüssel gebildeten Schweißfugen (32,33; 66,67) gerichtet. Anschließend wird das Felgenrad mit der Radschüssel unter Drehung derselben verschweißt (Fig. 2).

Fig.2

EP 0 276 664 A1

## Verfahren zur Herstellung von rundnahtgeschweißten Scheibenrädern

Die Erfindung betrifft ein Verfahren zur Herstellung von rundnahtgeschweißten Scheibenrädern, bestehend aus einem Felgenrad und der mit dem Felgenrad zu verschweißenden Radschüssel.

Scheibenräder dienen in Straßenfahrzeugen zur Aufnahme der Reifen. Das Felgenrad muß die von dem Reifenwulst übertragenen (Luft-) Kräfte aufnehmen und die Kräfte, die in der Reifenaufstandsfläche wirken (Radlast, Seitenkraft und Umfangskraft) und durch die Reifen-Seitenwand zu dem Reifenwulst weitergeleitet werden, auf die Radschüssel übertragen.

Es ist bekannt, jeweils ein Felgenrad und die mit dem Felgenrad zu verschweißende Radschüssel in Drehvorrichtungen zu positionieren und mittels zwei oder vier WIG-Brennern unter Verwendung von Schweißzusatzwerkstoffen miteinander zu verschweißen. Hierbei wird abhängig von der Anzahl der WIG-Brenner, das Felgenrad mit der Radschüssel in der Regel mit vier Schweißnähten verbunden, wobei entweder alle vier Schweißnähte gleichzeitig oder jeweils zwei Schweißnähte nacheinander an dem gleichen Scheibenrad geschweißt werden. Anschließend wird das Scheibenrad aus der Drehvorrichtung entnommen, ein neues Scheibenrad eingelegt und die WIG-Brenner auf den Nahtanfang der Schweißfugen eingestellt. Ein derartiges Verfahren zur Herstellung von rundnahtgeschweißten Scheibenrädern gewährleistet jedoch keinen optimalen Betrieb, da die verfügbare Schweißzeit nicht ständig in vollem Umfang genutzt wird. Die sich beim Entnehmen oder Einlegen der Scheibenräder ergebenden Nebenzeiten werden durch Rüstzeiten, die beispielsweise durch das Nachstellen der WIG-Elektrode entstehen, weiter erhöht. Zusätzlich fallen Nacharbeiten an, wie das Entfernen der Schweißspritzer oder der Schlacke vor dem Lackieren der Scheibenräder, die ebenfalls die Fertigungszeiten erhöhen und damit das Massenprodukt "Scheibenrad" verteuern. Nahtüberhöhungen aufgrund von beispielsweise Unregelmäßigkeiten im Drahtvorschub verhindern eine einwandfreie Montage der Bremsen.

Ferner ist ein $CO_2$-Axialstromlaser bekannt, der aus zwei Lasereinheiten besteht (Druckschrift 5020C30M Coherent 11/79, Seite 20, Everlase).

Der Erfindung liegt die Aufgabe zugrunde, ein wirtschaftliches Verfahren zur Verringerung der Fertigungszeiten beim Schweißen von Felgenrädern anzugeben.

Diese Aufgabe wird erfindungsgemäß dadurch gelöst, daß mindestens zwei aus einem gefalteten Axialstromlaser ausgekoppelte Laserstrahlen in mindestens zwei separaten Schweißköpfen fokussiert und auf die zwischen dem Felgenrad und der Radschüssel gebildeten Schweißfugen gerichtet werden und das Felgenrad mit der Radschüssel unter Drehung derselben verschweißt wird.

Die mit der Erfindung erzielten Vorteile bestehen insbesondere darin, daß einerseits mit den aus einem gefalteten Axialstromlaser ausgekoppelten zwei oder mehr Laserstrahlen gleichzeitig zwei Schweißfugen der Scheibenräder lasergeschweißt werden können. Andererseits ist bei der Laserschweißung der Scheibenräder kein Schweißzusatzwerkstoff erforderlich, so daß sehr - schmale Schweißnähte ohne Nahtüberhöhungen erzielt werden. Eine Mischung aus Schweißzusatzwerkstoffen und Scheibenradmaterialien im Schweißbad entfällt. Dies führt zu einer Erhöhung der technologischen Gütewerte der Schweißnähte, die besser sind, als die des Grundwerkstoffs. Es entsteht kein Schweißrauch bzw. - dämpfe, so daß entsprechende Absauganlagen entfallen können. Die lasergeschweißten Schweißnähte sind schlackefrei. Es kommt zu keiner Schweißspritzerbildung auf den Scheibenrädern, so daß Nacharbeiten entfallen.

Um einen optimalen Betrieb des Lasers zu gewährleisten, so daß die verfügbare Ausgangsleistung ständig in vollem Umfang genutzt werden kann, befinden sich in jedem Strahlweg der zwei aus einem Laser austretenden Laserstrahlen zwei hintereinander angeordnete Umlenkoptiken und Schweißköpfe, so daß abwechselnd an einem ersten oder zweiten Scheibenrad zwei Schweißnähte gleichzeitig lasergeschweißt werden können, während das jeweils nicht bearbeitete Scheibenrad entweder in eine neue Schweißposition gedreht oder aus der Positionier-und Drehvorrichtung entnommen und ein neues Felgenrad mit Radschüssel eingelegt werden kann. Vorteilhaft können in den Strahlwegen der zwei oder mehr Laserstrahlen auch mehr als zwei Umlenkoptiken und Schweißköpfe hintereinander angeordnet werden, so daß beispielsweise während das dritte Felgenrad mit der Radschüssel lasergeschweißt wird, das erste Scheibenrad aus der Positionier-und Drehvorrichtung entnommen und das zweite Scheibenrad in die zweite Schweißposition gedreht wird. Eine weitere vorteilhafte Möglichkeit zur Erhöhung der Taktzeiten besteht in der Verwendung eines in Form eines doppelten U gefalteten - schnellströmenden $CO_2$-Axialstromlasers, aus dem vier Laserstrahlen austreten, so daß gleichzeitig immer an zwei nebeneinander angeordneten Scheibenrädern jeweils zwei Schweißnähte erzeugt werden.

Vorteilhaft verlaufen die Laserstrahlen unter einem Freiwinkel von 3 bis 20° zur Wand des Felgenrades, so daß eine Beschädigung des Felgenrades ausgeschlossen werden kann.

Dadurch, daß die Freiwinkel, unter denen die Laserstrahlen zur Wand des Felgenrades verlaufen, mit den in den horizontalen Strahlachsen angeordneten Umlenkoptiken, insbesondere Umlenkspiegeln, gebildet werden und die Laserstrahlen über jeweils einen in den Schweißköpfen angeordneten - schwenkbaren Umlenkspiegel auf einen Hohlspiegel gerichtet und von diesem auf die Schweißfugen fokussiert werden, wird es vorteilhaft möglich, durch Schwenken des schwenkbaren Umlenkspiegels den Laserstrahl auf Scheibenräder mit kleinerem oder größerem Durchmesser enzustellen. Aufwendige Umrichtarbeiten bzw. Vorrichtungen können entfallen.

Vorteilhafte Weiterbildungen der Erfindung sind in den Unteransprüchen angegeben.

Ein Ausführungsbeispiel der Erfindung ist in der Zeichnung dargestellt und wird im folgenden näher beschrieben.

Es zeigen:

Fig. 1 eine schematische Draufsicht eines 4-kW-Lasers mit zwei ausgekoppelten Laserstrahlen, die zeitlich nacheinander auf zwei Schweißfugen eines Scheibenrades gerichtet sind;

Fig. 2 eine schematische Darstellung der umgelenkten und fokussierten Laserstrahlen;

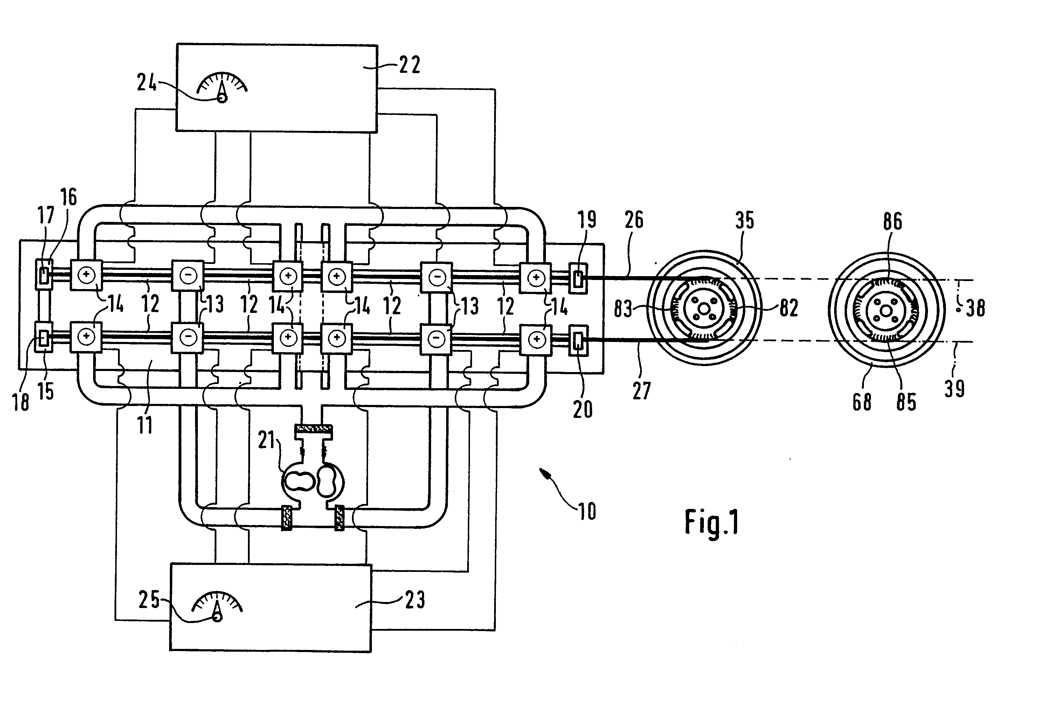

In der Fig. 1 ist schematisch ein gefalteter Hochleistungs-$CO_2$-Axialstromlaser für die Materialbearbeitung dargestellt, mit dem eine maximale Laser-Ausgangsleistung von 4000 Watt erreicht wird. Der schnellströmende $CO_2$-Axialstromlaser 10 ist in Form eines U gefaltet. Der optische Resonator 11 besteht aus acht Entladungsrohren 12, vier als Kathodenköpfe ausgebildeten Elektroden 13 und acht als Anodenköpfe ausgebildeten Elektroden 14. Durch zwei an den Umlenkstellen 15, 16 angeordnete Endspiegel 17, 18 und zwei den Endspiegeln gegenüberliegende Auskoppelspiegel 19, 20 wird eine Lasereinheit mit zweimal zwei kW gebildet. Die Elektroden 13, 14, die Entladungsrohre 12 und die Spiegel 17, 18, 19, 20 sind wassergekühlt. Als Lasermedium dient ein - schnellströmendes Helium-Stickstoff-Kohlendioxid-Gemisch. Den Gastransport des in sich geschlossenen Gaskreislaufes übernimmt eine Pumpe 21. Der Betriebsdruck beträgt etwa 80 Millibar.

Die Laserstrahlung wird von einer elektrischen Gasentladung angeregt, durch Anlegen einer Hochspannung zwischen den Elektroden 14 und 13. Jeder zwischen den Endspiegeln 17 bzw. 18 und den Auskoppelspiegeln 19 bzw. 20 erzeugten Entladungsstrecke ist jeweils eine Hochspannungsquelle 22, 23 zugeordnet. Jede Hochspannungsquelle 22, 23 weist ein Steuerglied 24, 25 auf, mittels dem die Ausgangsleistung der zwei Laserstrahlen 26, 27 veränderbar ist. Die aus dem Resonator ausgekoppelten Laserstrahlen 26, 27 werden in mindestens zwei separaten Schweißköpfen 28, 29 fokussiert und auf die zwischen einem Felgenrad 30 und einer Radschüssel 31 gebildeten Schweißfuge 32, 33 gerichtet.

Im folgenden wird die Herstellung von Scheibenrädern beschrieben, bei denen die Felgenräder über vier unterbrochene Rundschweißnähte mit den Radschüsseln verbunden werden.

Zur Schweißung des Felgenrades 30 mit der Radschüssel 31 wird das Scheibenrad 35 (Fig. 1) mittels nicht näher dargestellter Dreh-und Positioniervorrichtungen um die Mittelachse 34 des Scheibenrades 35 gedreht. Die aus den Auskoppelspiegeln 19, 20 austretenden Laserstrahlen 26, 27 werden über zwei Umlenkoptiken 36, 37, insbesondere Umlenkspiegel, um 90° zu den horizontalen Strahlachsen 38, 39 und unter jeweils einem Winkel 40, 41 von vorzugsweise 3 bis 20° zur Vertikalen 42, 43 umgelenkt. Über in den Strahlwegen hinter den Umlenkspiegeln 36, 37 angeordneten zweiten Umlenkspiegeln 46, 47 werden die Laserstrahlen um vorzugsweise 45° auf die Hohlspiegel 44, 45 gelenkt und von diesen bei einer 90° Umlenkung auf die Schweißfugen 32, 33 fokussiert.

Die Freiwinkel 48, 49, die sich zwischen den Laserstrahlen 26, 27 und jeder in die Stirnseite 52, der Radschüssel 31 gelegten Vertikalachse 54, 55 ergeben, entsprechen dann den Winkeln 40, 41.

Selbstverständlich ist es nicht erforderlich, daß die Winkel 40, 41 den Freiwinkeln 48, 49 entsprechen. Die Laserstrahlen 26, 27 werden durch diese Freiwinkel 48, 49 so auf die Schweißfugen 32, 33 gerichtet, daß sie frei von der Wand 50 des Felgenrades 30 sind und dieses beim Schweißen nicht beschädigen.

Die Umlenkspiegel 46, 47 sind vorteilhaft um die Achsen 56, 57 in Pfeilrichtung A, B - schwenkbar, so daß über eine Veränderung des Umlenkwinkels Scheibenräder 35 mit größerem und kleineren Durchmesser geschweißt werden können.

Die in den Laserstrahlen 26, 27 mit den horizontalen Strahlachsen 38, 39 angeordneten Umlenkspiegel 36, 37 sind aus den Strahlwegen klappbar, so daß die Laserstrahlen 26, 27 aus den vorstehend beschriebenen Schweißköpfen 28, 29 ausgekoppelt und in zweite gleich aufgebaute Schweißköpfe 69, 70 über zwei Umlenkoptiken 58, 59, insbesondere Umlenkspiegel eingekoppelt werden. Die zweite Strahlführung besteht ebenso wie die erste aus zwei weiteren Umlenkspiegeln 60, 61, die ebenfalls um die Achsen 62, 63 in Pfeilrichtung C, D schwenkbar sind und die Laserstrahlen 26, 27 auf zwei Hohlspiegel 64, 65 umlenken, die die Laserstrahlen auf die Schweißfugen 66, 67 eines zweiten Scheibenrades 68 (Fig. 1) fokussieren. Die Umlenkspiegel 60, 61 und die Hohlspiegel 64, 65 sind in zwei Schweißköpfen 69, 70 angeordnet. Das zweite Felgenrad ist mit 71 und die zweite Radschüssel mit 72 bezeichnet. Die Laserstrahlen 26, 27 werden in dieser zweiten Strahlführung über die Umlenkspiegel 58, 59 unter 90° zu den horizontalen Strahlachsen 38, 39 und unter den Winkeln 73, 74 von vorzugsweise 3 bis 20 °zu den Vertikalen 75, 76 auf die Umlenkspiegel 60, 61 umgelenkt. Von den vorzugsweise unter 45° angeordneten Umlenkspiegeln 60, 61 werden die Laserstrahlen 26, 27 auf die Hohlspiegel 64, 65 gerichtet und von diesen unter Beibehaltung der Freiwinkel 78, 79 zwischen der Wand 80 des zweiten Felgenrades 71 und den Laserstrahlen 26, 27 auf die Schweißfugen 66, 67 fokussiert. Die Freiwinkel 78, 79 bilden sich zwischen den Laserstrahlen 26, 27 und den in die Stirnseite 77 der Radschüssel 72 gelegten Vertikalachsen 75, 76. Das Scheibenrad 68 ist auf einer nicht näher dargestellten Positionier-und Drehvorrichtung angeordnet und wird von dieser, während des Schweißens um die Mittelachse 81 gedreht.

Mit dem vorstehend beschriebenen $CO_2$-Axialstromlaser und der Strahlführung werden die rundnahtgeschweißten Scheibenräder 35, 68 wie folgt hergestellt:
Die mit horizontalen Strahlachsen 38, 39 aus dem optischen Resonator ausgekoppelten Laserstrahlen 26, 27 werden über Umlenkspiegel 36, 37 sowie den Schweißköpfen 28, 29 um 90° zu den horizontalen Strahlachsen 38, 39 und unter jeweils einem Winkel 40, 41 zu den Vertikalen 42, 43 auf zwei gegenüberliegende Schweißnahtanfänge der Schweißfugen 32, 33 umgelenkt und fokussiert. Danach wird das Felgenrad 30 mit der Radschüssel 31 bis zu den Schweißnahtenden der Schweißfugen 32, 33 gedreht und die Laserstrahlen 26, 27 beim Erreichen der Schweißnahtenden aus den Schweißköpfen 28, 29 durch Umklappen der Umlenkspiegel 36, 37 ausgekoppelt und in zwei in den horizontalen Strahlachsen 38, 39 dahinterliegende zweite Schweißköpfe 69, 70 über Umlenkspiegel 58, 59 eingekoppelt. Die Laserstrahlen 26, 27 werden von diesen Umlenkspiegeln 58, 59 um 90° zu den horizontalen Strahlachsen 38, 39 und unter jeweils einem Winkel 73, 74 auf die Schweißnahtanfänge der Schweißfugen 66, 67 von den zweiten Scheibenrad 68 umgelenkt und fokussiert.

Selbstverständlich ist es auch möglich, die Laserstrahlen 26, 27 über die Umlenkspiegel 36, 37, 58, 59 nur um 90° zu den horizontalen Strahlachsen 38, 39 umzulenken und die Freiwinkel 48, 49 und 78, 79 über eine Umlenkoptik in den Schweißköpfen bzw. über die Umlenkspiegel 46, 47, 60, 61 vorzunehmen.

Danach wird das zweite Felgenrad 71 mit der zweiten Radschüssel 72 bis zu den Schweißnahtenden der Schweißfugen 66, 67 gedreht, während das erste Scheibenrad 35 in Schweißposition gedreht wird und die Laserstrahlen 26, 27 beim Erreichen der Schweißnahtenden des zweiten Scheibenrades 68 auf zwei weitere Schweißnahtanfänge von zwei weiteren Schweißfugen 82, 83 (Fig. 1) des ersten Scheibenrades 35 umgelenkt und fokussiert werden. Hierzu werden die Umlenkspiegel 36, 37 in die Strahlwege der Laserstrahlen 26, 27 eingeklappt. Während das erste Felgenrad 30 mit der Radschüssel 31 unter Drehung um die Mittelachse 34 geschweißt wird, wird das zweite Scheibenrad in die zweite Schweißposition gedreht. Nach Fertigstellung der zweiten Schweißnähte des Scheibenrades 35 werden die weiteren zwei Schweißfugen 85, 86 des zweiten Scheibenrades 68 unter Drehung geschweißt, während das erste Scheibenrad 35 aus der Schweißposition entfernt und ein drittes Scheibenrad in der Schweißposition angeordnet wird. Beim Erreichen der Schweißnahtenden der zweiten Schweißfugen 85, 86 des zweiten Scheibenrades 68 werden die Laserstrahlen 26, 27 aus den zweiten Schweißköpfen 69, 70 ausgekoppelt und in die zwei in den horizontalen Strahlenachsen 38, 39 davorliegenden Schweißköpfe 28, 29 eingekoppelt. Durch das vorstehend beschriebene Verfahren ist eine optimale Nutzung der Laserleistung gegeben, da es zu keiner Unterbrechung des Laserbetriebes beim Schweißen der Scheibenräder 35, 68 kommt.

Selbstverständlich ist es auch möglich, mehr als zwei Scheibenräder 35, 68 hintereinander anzuordnen und über die entsprechenden Strahlführungssysteme abwechselnd die in der Regel aus vier Schweißnähten bestehende Verbindung zwischen Felgenrad und Radschüssel auszuführen. Auch ist es möglich, anstatt zwei Laserstrahlen 26, 27 vier Laserstrahlen aus einem Laser auszukoppeln und somit gleichzeitig zwei nebeneinander angeordnete Scheibenräder zu bearbeiten.

Vorteilhaft werden die Scheibenräder 35, 36 mit einem 6 kW-Laser, der in Lasereinheiten von zweimal 3 kW aufgeteilt ist, bearbeitet. Bei einer Einschweißtiefe zwischen 3 bis 4 Millimetern werden mit dieser Laseranlage die Schweißnähte mit einer Geschwindigkeit von 45 Metern pro Sekunde geschweißt.

## Ansprüche

1. Verfahren zur Herstellung von rundnahtgeschweißten Scheibenrädern, bestehend aus einem Felgenrad und der mit dem Felgenrad zu verschweißenden Radschüssel,
dadurch gekennzeichnet
daß mindestens zwei aus einem gefalteten Axialstromlaser (10) ausgekoppelte Laserstrahlen (26, 27) in mindestens zwei separaten Schweißköpfen (28, 29 bzw. 69, 70) fokussiert und auf die zwischen dem Felgenrad (30 bzw. 71) und der Radschüssel (31 bzw. 72) gebildeten Schweißfugen (32, 33, 82, 83 bzw. 66, 67, 85, 86) gerichtet werden und das Felgenrad mit der Radschüssel unter Drehung derselben verschweißt wird.

2. Verfahren nach Anspruch 1,
dadurch gekennzeichnet,
daß die Laserstrahlen (26, 27) mit horizontalen Strahlachsen (38, 39) aus dem optischen Resonator (11) ausgekoppelt und über Umlenkoptiken (36, 37) sowie den Schweißköpfen (28, 29) um 90° zu den horizontalen Strahlachsen und unter jeweils einem Winkel (40,41) zur Vertikalen (42, 43) auf zwei gegenüberliegende Schweißnahtanfänge der Schweißfugen (32, 33) von einem ersten Scheibenrad (35) umgelenkt und fokussiert werden, danach wird das Felgenrad (30) mit der Radschüssel (31) bis zu den Schweißnahtenden der Schweißfugen (32, 33) gedreht und die Laserstrahlen (26, 27) beim Erreichen der Schweißnahtenden aus den Schweißköpfen (28, 29) ausgekoppelt und in zwei in den horizontalen Strahlachsen (38, 39) dahinter liegende zweite Schweißköpfe (69, 70) eingekoppelt, wobei die Laserstrahlen (26, 27) um 90° zu den horizontalen Strahlachsen (38, 39) und unter jeweils einem Winkel (73, 74) zur Vertikalen (75, 76) auf die Schweißnahtanfänge der Schweißfugen (66, 67) von einem zweiten Scheibenrad (68) umgelenkt und fokussiert werden, danach wird das zweite Felgenrad (71) mit der zweiten Radschüssel (72) bis zu den Schweißnahtenden der Schweißfugen (66, 67) gedreht, während das erste Scheibenrad (35) in Schweißposition gedreht wird und die Laserstrahlen (26, 27) beim Erreichen der Schweißnahtenden des zweiten Scheibenrades (68) auf zwei weitere Schweißnahtanfänge von zwei weiteren Schweißfugen (83, 84) des ersten Scheibenrades (35) umgelenkt und fokussiert werden und während das erste Felgenrad (30) mit der Radschüssel unter Drehung geschweißt wird, wird das zweite Scheibenrad (68) in die zweite Schweißposition gedreht.

3. Verfahren nach Anspruch 1 oder 2,
dadurch gekennzeichnet,
daß die Laserstrahlen (26, 27) unter einem Winkel (40, 41 bzw. 73, 74) von 3 bis 20 Grad zur Vertikalen (42, 43, bzw. 75, 76) verlaufen, wobei Freiwinkel (48, 49 bzw. 78, 79) zwischen den Laserstrahlen (26, 27) und jeweils einer in die Stirnseite (52 bzw. 77) der Radschüssel (31 bzw. 72) gelegtem Vertikalachse (54, 55 bzw. 75, 76) gebildet werden.

4. Verfahren nach einem der Ansprüche 1 bis 3,
dadurch gekennzeichnet,
daß die Winkel (40, 41 bzw. 73, 74) zur Vertikalen (42, 43 bzw. 75, 76) von den in den horizontalen Strahachsen (38, 39) angeordneten Umlenkoptiken (36, 37 bzw. 58, 59) erzeugt werden und die Laserstrahlen (26, 27) über jeweils einen in den Schweißköpfen (28, 29 bzw. 69, 70) angeordneten drehbaren Umlenkspiegel (46, 47, bzw. 60, 61) auf Hohlspiegel (44, 45 bzw. 64, 65) gerichtet und von diesem auf die Schweißfugen (32, 33 bzw. 66, 67) fokussiert werden.

5. Verfahren nach einem der Ansprüche 1 bis 4,
dadurch gekennzeichnet,
daß die weiteren Schweißfugen (66, 67) des zweiten Scheibenrades (68) unter Drehung geschweißt werden, während das erste Scheibenrad (35) aus der Schweißposition entfernt und ein drittes Scheibenrad in der Schweißposition angeordnet wird und die Laserstrahlen (26, 27) beim Erreichen der Schweißnahtenden des zweiten Scheibenrades (68) aus den zweiten Schweißköpfen (69, 70) ausgekoppelt und in die zwei in den horizontalen Strahlenachsen (38, 39) davor liegenden Schweißköpfe (28, 29) eingekoppelt werden.

6. Vorrichtung zur Durchführung des Verfahrens nach einem der Ansprüche 1 bis 5, gekennzeichnet durch einen gefalteten schnellströmenden $CO_2$-Axialstromlaser (10) mit einem optischen Resonator (11) bestehend aus mindestens zwei vorzugsweise in Form eines U oder V zueinander angeordneten Entladungsrohren (12), die an einen Lasergaskreislauf angeschlossen sind, in welchem eine Pumpe (21) den Lasergastransport übernimmt und an den Umlenkstellen (15, 16) des Laserstrahles Endspiegel (17, 18) und an den Endstellen Auskoppelspiegel (19, 20) zum Auskoppeln von mindestens zwei Laserstrahlen (26, 27) angeordnet sind, wobei der Laser einen elektrischen Anregungskreis aufweist, der mindestens zwei Hochspannungsquellen (22, 23) umfaßt, welche über Elektroden (13, 14) an die Entladungsstrecken angeschlossen sind und die zwischen jeweils einem Endspiegel (17, 18) und einem Auskoppelspiegel (19, 20) den Entladungsstrecken zugeordneten Hochspannungsquellen (22, 23) über jeweils ein Steuerglied (24, 25) in ihrer Ausgangsleistung veränderbar sind und mit in den Strahlwegen der zwei Laserstrahlen angeordneten Umlenkoptiken (36, 37 bzw. 58, 59) und Schweißköpfen (28, 29 bzw. 69, 70) mit Fokussieroptiken (44, 45, 46, 47 bzw. 60, 61, 64, 65) sowie unter den Schweißköpfen angeordneten Positionier-und Drehvorrichtungen für die Scheibenräder (35, 68).

7. Vorrichtung nach Anspruch 6,
dadurch gekennzeichnet,
daß in den Strahlwegen der zwei Laserstrahlen (26, 27) zwei weitere Umlenkoptiken (58, 59) und Schweißköpfe (69, 70) angeordnet sind und den in den Strahlwegen mit kleinerem Abstand zu den Auskoppelspiegeln (19, 20) angeordneten Schweißköpfen (28, 29) in bzw. aus den Strahlwegen verfahrbare Umlenkoptiken (36, 37) zugeordnet sind.

8. Vorrichtung nach Anspruch 6 oder 7, dadurch gekennzeichnet,
daß den weiteren Schweißköpfen (69, 70) zwei weitere Positionier-und Drehvorrichtungen zugeordnet sind.

Fig.1

Fig.2

# EUROPÄISCHER RECHERCHENBERICHT

## EINSCHLÄGIGE DOKUMENTE

EP 88100220.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 4 326 118 (SMITH)<br>* Fig. *<br>-- | 1 | B 23 K 26/00 |
| A | US - A - 4 223 202 (PETERS)<br>* Fig. 2 *<br>-- | 1 | |
| A | US - A - 4 080 525 (GOBETZ)<br>* Fig. 1,2 *<br>-- | 1 | |
| A | EP - A1 - 0 015 003 (HITACHI)<br>* Fig. 1 *<br>-- | 6 | |
| A | DE - A1 - 3 446 640 (AMADA)<br>* Fig. 2-5 *<br>---- | 6 | |

| RECHERCHIERTE SACHGEBIETE (Int. Cl.4) |
|---|
| B 23 K 26/00 |
| H 01 S 3/00 |

Der vorliegende Recherchenbericht wurde für alle Patentansprüche erstellt.

| Recherchenort | Abschlußdatum der Recherche | Prüfer |
|---|---|---|
| WIEN | 19-04-1988 | BENCZE |